(19)

Europäisches
Patentamt

European
Patent Office

Office européen
des brevets

(11)  **EP 2 932 466 B1**

(12)  # EUROPEAN PATENT SPECIFICATION

(45) Date of publication and mention
of the grant of the patent:
**04.12.2019   Bulletin 2019/49**

(51) Int Cl.:
**G06T 7/174** (2017.01)        **G06K 9/34** (2006.01)
**G06T 7/593** (2017.01)        **G06T 7/11** (2017.01)

(21) Application number: **12801730.8**

(22) Date of filing: **12.12.2012**

(86) International application number:
**PCT/EP2012/075284**

(87) International publication number:
**WO 2014/090304 (19.06.2014 Gazette 2014/25)**

(54)  **METHOD AND APPARATUS FOR SEGMENTATION OF 3D IMAGE DATA**

VERFAHREN UND VORRICHTUNG ZUR SEGMENTIERUNG VON 3D-BILDDATEN

PROCÉDÉ ET APPAREIL DE SEGMENTATION DE DONNÉES D'IMAGES 3D

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**21.10.2015   Bulletin 2015/43**

(73) Proprietor: **Huawei Technologies Co., Ltd.
Longgang District
Shenzhen, Guangdong 518129 (CN)**

(72) Inventors:
• **CORDARA, Giovanni**
**80992 München (DE)**
• **BOUAZIZI, Imed**
**80992 München (DE)**
• **KONDRAD, Lukasz**
**80992 München (DE)**

(74) Representative: **Körber, Martin Hans
Mitscherlich PartmbB
Patent- und Rechtsanwälte
Sonnenstrasse 33
80331 München (DE)**

(56) References cited:
**US-A1- 2008 137 989**

• **XIAOFENG REN ET AL: "RGB-(D) scene labeling:
Features and algorithms", COMPUTER VISION
AND PATTERN RECOGNITION (CVPR), 2012 IEEE
CONFERENCE ON, IEEE, 16 June 2012
(2012-06-16), pages 2759-2766, XP032232398,
DOI: 10.1109/CVPR.2012.6247999 ISBN:
978-1-4673-1226-4**
• **NATHAN SILBERMAN ET AL: "Indoor scene
segmentation using a structured light sensor",
COMPUTER VISION WORKSHOPS (ICCV
WORKSHOPS), 2011 IEEE INTERNATIONAL
CONFERENCE ON, IEEE, 6 November 2011
(2011-11-06), pages 601-608, XP032095295, DOI:
10.1109/ICCVW.2011.6130298 ISBN:
978-1-4673-0062-9**
• **DEIRDRE O'REGAN ET AL: "Implicit spatial
inference with sparse local features", IMAGE
PROCESSING, 2008. ICIP 2008. 15TH IEEE
INTERNATIONAL CONFERENCE, IEEE,
PISCATAWAY, NJ, USA, 12 October 2008
(2008-10-12), pages 2388-2391, XP031374520,
ISBN: 978-1-4244-1765-0**
• **SIRMACEK B ET AL: "Urban-Area and Building
Detection Using SIFT Keypoints and Graph
Theory", IEEE TRANSACTIONS ON
GEOSCIENCE AND REMOTE SENSING, IEEE
SERVICE CENTER, PISCATAWAY, NJ, US, vol.
47, no. 4, 1 April 2009 (2009-04-01), pages
1156-1167, XP011253185, ISSN: 0196-2892**

EP 2 932 466 B1

**(Cont. next page)**

- IONUT SCHIOPU ET AL: "Lossy and near-lossless compression of depth images using segmentation into constrained regions", SIGNAL PROCESSING CONFERENCE (EUSIPCO), 2012 PROCEEDINGS OF THE 20TH EUROPEAN, IEEE, 27 August 2012 (2012-08-27), pages 1099-1103, XP032254509, ISBN: 978-1-4673-1068-0

- LOWE D G: "Object recognition from local scale-invariant features", COMPUTER VISION, 1999. THE PROCEEDINGS OF THE SEVENTH IEEE INTERNATION AL CONFERENCE ON KERKYRA, GREECE 20-27 SEPT. 1999, LOS ALAMITOS, CA, USA,IEEE COMPUT. SOC, US, vol. 2, 20 September 1999 (1999-09-20), pages 1150-1157, XP010350490, ISBN: 978-0-7695-0164-2

## Description

### Field of the invention

The present invention relates to a method and an apparatus for segmentation of 3D image data. In particular, the present invention relates to a method and an apparatus for real time object segmentation in 3D image data based on sparse graphs.

### Background

Presentation of 3D image content has been recently made available to consumers. It is expected that the amount of 3D equipment and video content increases rapidly within the next few years.

On the one hand, current 3D display technologies can recreate the effect of convergence, i.e. vertical rotation of both eyes in opposite directions to maintain binocular vision. On the other hand, other important depth cues, such as accommodation, for example a change of focus, cannot be faithfully reproduced as the resulting image is displayed on a flat surface. Thus, when displaying a close object on a distant screen, a strong positive disparity may result in an uncomfortable viewing experience. Video content which has been optimized for a standard cinema screen will look completely different on a TV screen or a handheld display device. Accordingly, image data and in particular the differences of depth values of the objects closest and furthest from the viewer have to be adapted to the special properties of the different applications in order to maintain high quality depth perception. This operation is denoted as content re-targeting or content re-mapping.

Content re-targeting generally refers to adjustment of an image or a video frame in order to adapt the content to the desired context. In the field of a 3D video content, content re-targeting performs an adjustment of the depth range related to a 3D video sequence to optimize perception according to terminal capabilities and viewing distance. The most straightforward way of adjusting the depth is to shift it linearly according to the available depth range. However, this may result in flattening objects in the scene. Alternatively, a non-linear depth adjustment may be performed. A non-linear depth adjustment may allow to apply shifts to the entire objects, for example in foreground. This may lead to a significant improvement of a 3D user experience. Further, non-linear depth adjustment provides more freedom in scene manipulation.

To perform non-linear depth adjustment, unique objects in the 3D scene have to be identified. In this way independent manipulation of the depth value of the individual objects may be performed in a re-targeting phase. For example, foreground objects can be moved to the image forefront. Background objects can be moved to the back. The depth ratios between different parts of the segmented objects may be still preserved.

However, conventional methods for re-targeting, in particular for segmentation of an image in a non-linear depth manipulation usually analyze the individual pixels of an image. Due to the large number of pixels in the images, these methods require huge computational resources.

Related and known technology is e.g. described in XIAOFENG REN ET AL: "RGB-(D) scene labeling: Features and algorithms", COMPUTER VISION AND PATTERN RECOGNITION (CVPR), 2012 IEEE CONFERENCE ON, IEEE, 16 June 2012 (2012-06-16), pages 2759-2766; and in US 2008/0137989 wherein 3D image data is generated. 3D depth information is estimated from a still image. A set of monocular images and their corresponding ground-truth depth maps are used to determine a relationship between monocular image features and the depth of image points. For different points in a particular image, the determined relationship is used together with local and global image features including monocular cues to determine relative depths of the points.

Further, US 2008/0137989A1 refers to three-dimensional image data. Three-dimensional depth information is estimated from a still image. A set of monocular images and their corresponding ground-truth depth maps are used to determine a relationship between monocular image features and the depth of image points. For different points in a particular image, the determined relationship is used together with local and global image features including monocular cues to determine relative depths of the points.

As already mentioned, there is a steadily growing number of 3D devices. To adapt 3D video content to each of the individual devices, each device has to perform a re-targeting of the image data. However, small devices, such as mobile devices only provide limited computational capabilities.

Hence, there is a need for a method and an apparatus providing an efficient image segmentation of 3D image content.

There is also a need for an image segmentation of 3D image content which can be applied in real time on a 3D image device having the limited computational resources.

**Summary**

In a first aspect a method for segmentation of 3D image data of a 3D image is provided, the method comprising:

- determining local features for each of a plurality of views of the 3D image, wherein each view corresponds to a different 2D image;
- determining a local feature graph based on the determined local features, wherein the local feature graph comprises a plurality of vertexes relating to the local features, wherein each local feature is a compact description of a patch surrounding a point of the 3D image and each vertex is linked to a predetermined number of spatially adjacent vertexes, and the determining the local feature graph comprises assigning an edge weight to each edge between two vertexes;
- quantising a depth map of the 3D image data;
- identifying depth regions by determining contiguous depth map elements having a same quantised depth value;
- identifying texture regions comprising consistent pixels in the 3D image based on the 3D image data;
- for each of the texture regions among the identified texture regions:

  o calculating a confidence value for the texture region by using the following formula:

$$confidence\ value = \frac{nDR - 1}{nFeat},$$

  wherein nDR is a number of depth regions covered by the texture region and nFeat is a number of local features of the local feature graph in the texture region;
  o comparing the calculated confidence value with a threshold value; and determining the texture region as an unreliable texture region if the calculated confidence value is below the threshold value and determining the texture region as a reliable texture region if the calculated confidence value is equal to or higher than the threshold value;

- eliminating the unreliable texture regions;
- computing, for each reliable texture region, a histogram of a local feature distribution among the depth regions covered by the texture region;
- segmenting the 3D image into a plurality of depth regions based on the histograms of the reliable texture regions.

In a first implementation form of the first aspect the method further comprising:
separating the 3D image data into foreground image data and background image data, wherein the segmentation is performed only for the foreground image data.
In a second aspect a 3D image segmentation apparatus is provided for segmentation of 3D image data of a 3D image, wherein the 3D image segmentation apparatus is configured and intended to perform any of the above methods.
These and other aspects of the invention will be apparent from the embodiment(s) described below.

**Brief description of the figures**

In the following, embodiments of the invention will be described, by way of example only, with reference to the accompanying drawings in which

Fig.1 schematically illustrates a set of image data of a 3D image as used by an embodiment of the method according to the present invention;

Fig.2 schematically illustrates a flow diagram of a method for segmentation of 3D image data according to an embodiment of the invention;

Fig.3 schematically illustrates the flow diagram for the 3D image data into a plurality of depth regions according to an embodiment of the invention;

Fig.4 schematically illustrates a 3D image segmentation apparatus according to an embodiment of the invention;

Fig.5 schematically illustrates a 3D image segmentation apparatus according to another embodiment of the invention;

Fig.6 schematically illustrates a flow diagram of a method for segmentation of 3D image data according to an embodiment of the invention; and

Fig.7 schematically illustrates a 3D image segmentation apparatus according to another embodiment of the invention.

**Detailed description**

In the following, terms for describing a direction like "above", "below", "left", "right" and so on are only for a better understanding of the figures and do not limit the present invention. Same reference numerals relate to same components. The dimensions of the figures are only for illustrated purposes and do not limit the invention in any way.

3D image data as used by the method according to the present invention relates to all image data which represent or can be used for generating a 3D representation of a 3D image. 3D image data may relate to an individual 3D image, a single 3D image within a sequence of images or a plurality of successive 3D images within a video sequence. Image data may be provided either in an uncompressed format or may be compressed according to any compression standard. If the image data are provided in a compressed format, the data may be decompressed before segmentation according to the present invention is performed.

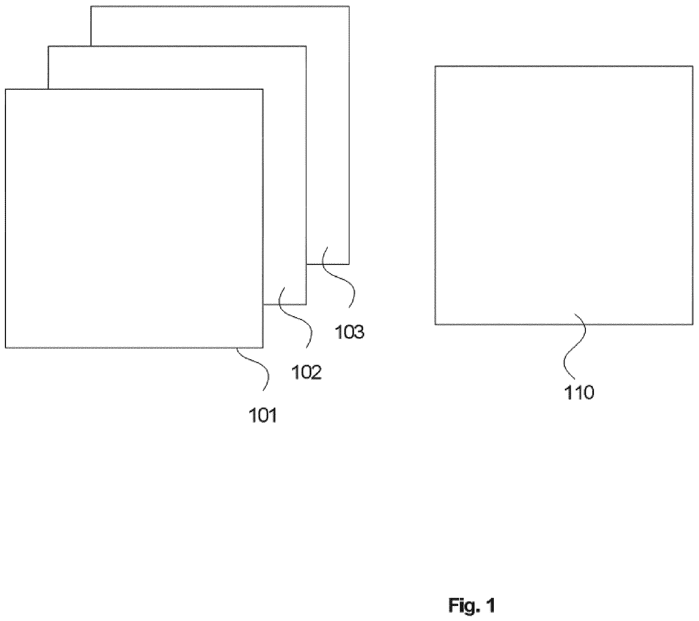

Figure 1 illustrates an exemplary set of 3D image data. The image data comprise a plurality of views 101, 102 and 103 of a 3D image. Usually, all views relate to a single 3D image of a 3D scene, wherein each view 101, 102 and 103 is captured from a different predetermined perspective. Even though the example of Figure 1 illustrates three views 101, 102 and 103, the 3D image data also may comprise only one or two views, for instance one view relating to the left eye and one view relating to the right eye. Further to this, more than three views, for instance four, five or more views are also possible.

In addition to the plurality of views 101, 102 and 103, the 3D image data may further comprise a depth map 110 of the 3D image. The depth map 110 can be obtained directly by receiving the depth map 110 from an external device. For this purpose, a range camera, for instance a time-of-flight camera, may be used. Alternatively, the depth map 110 can be obtained by computing based on the 3D image data. For example, the depth map 110 can be obtained from one or more texture frames or the depth map 110 can be computed or provided by any other means.

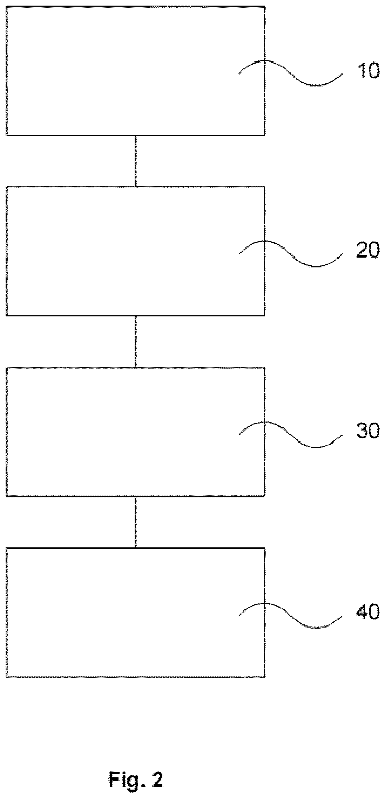

Figure 2 shows a flowchart illustrating a segmentation method according to an embodiment of the present invention. In a first step 10, 3D image data are received. 3D image data comprise a plurality of views as described above. The plurality of views of the image, and the depth map 110 may be obtained. The image data can be provided from a camera, a camera system or the data can be received from a transmission interface, e.g. a wireless or wired transmission interface, or a memory means storing 3D image data. Alternative 3D image data sources for providing 3D image data are also possible.

The depth map 110 may be obtained, for example, by computing in additional sub-steps based on the received 3D image data. Alternatively, it is also possible to obtain the depth map 110 by receiving an already existing depth map 110 of the 3D image, together with the above-described views of the 3D image.

In a further step 20, local features are determined for each of the plurality of views 101, 102 and 103. Local features in computer vision usually are used, for instance, for object identification or image registration. Usually, local features are invariant to a rotation, illumination and perspective distortions.

In order to determine the local features in step 20, any of the already known methods for determining local features can be used. For instance, the local features may be determined based on the Scale-Invariant Feature Transforms algorithm (SIFT) or the Speeded Up Robust Features algorithm (SURF). Other algorithms or modifications of the above-described algorithms for determining the local features are also possible.

A local feature is a compact description of a patch surrounding a point of an image. To compute a local feature, a main orientation of a point is computed based on the main gradient component in the environment of the point. Starting from this orientation, a surrounding path oriented towards the main orientation is extracted. After this, the patch is subdivided into a rectangular or a radial grid. For each element of the grid, a histogram of the local gradients is computed. Histograms computed on the grid elements represent the components of the local feature.

Normally, local features are computed for the key points of a scene. In particular, these key points all relate to peculiar elements of this scene, for instance corners, specific patterns, etc. To improve the segmentation of 3D image data, local features providing a good description of a surrounding texture region may be preferred. For this purpose, SIFT or SURF descriptors, for example Kanade-Lucas-Tomasi (KLT) features, centres of gravity of the depth regions or even random points may be used. However, corners or edge detectors are less suited, since they tend to identify points which normally occupy the border of a texture region in a correct segmentation.

After the determination of the local features in the image data has been completed, a local feature graph is determined in step 30. The local feature graph is generated based on the set of local features determined in step 20. To build-up the graph, each local feature is linked to a predetermined number of spatially adjacent local features. Thus a sparse graph is generated, the graph comprising a plurality of vertexes, each vertex relating to a local feature.

Next, edge weights are assigned to the edges linking together the vertexes. For example, the norm of the RGB colour differences may be used for determining the edge weight. Other criteria, for instance the relative distance of two different vertexes or a depth value assigned to the vertexes may be also used for determining the edge weight. Further to this, a combination of the afore-mentioned criteria or other alternative criteria for determining the edge weight may be used.

Based on the generated local feature graph, a graph cut mechanism is applied. Graph cut algorithms are already known. However, conventional graph cut methods for segmentation of an image are computed on pixel basis. Thus, conventional graphs comprise a very large number of vertexes. Such a large number of vertexes leads to huge computational effort. In contrast to this, a graph cut mechanism based on a sparse graph according to the present invention can be performed with smaller computational resources.

Next, in step 40, segmentation is performed based on the local features, in particular based on the local feature graph and the depth map. The 3D image data is segmented into a plurality of depth regions based on the determined local feature graph and the depth map.

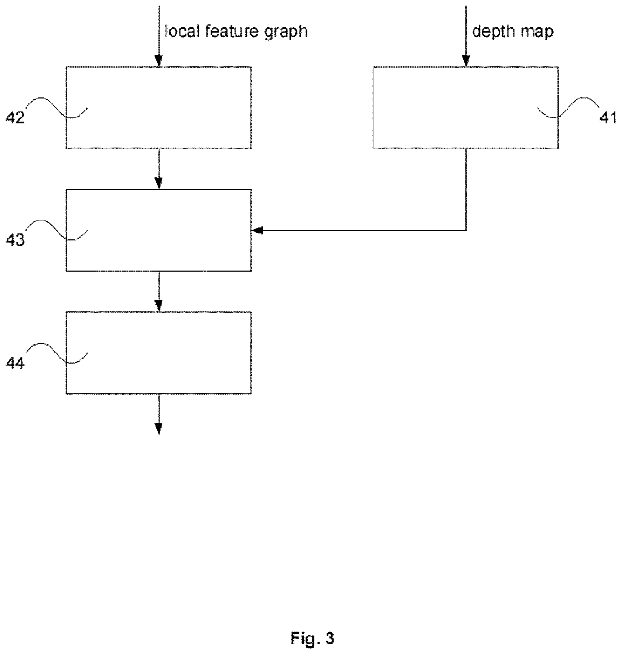

Figure 3 illustrates a flowchart of a method for performing image segmentation according to an embodiment of the present invention.

The depth map 110 may be represented as a bi-dimensional matrix, composed by a number of depth map elements. Each depth map element may be or represent a pixel or a plurality of pixels.

In step 41, a quantisation of the depth map 110 is performed. By this quantization, the range of values assumed by the depth map elements in the depth map 110 is divided into a predetermined number of sub-ranges. All values assumed by the depth map elements within a same sub-range are assigned to a common quantized depth value. This quantisation is used to identify adjacent depth map elements having the same quantized depth in order to determine a depth region. The identified depth regions are used as starting point for the following segmentation procedure.

In order to limit the number of depth regions and to correct inconsistencies, for example irregularities on the border of a depth region, small depth regions may be merged to an adjacent depth region, as follows: distances between the quantized depth value of the small depth region and all the quantized depth values of the adjacent depth regions are computed, respectively, and the small depth region may be merged to the one with the minimum distance. The process may be iterated until all the depth regions are bigger than a predetermined threshold.

Unreliable texture regions are eliminated in step 42. The texture regions are identified and the reliability of the texture regions is evaluated.

After the above-described graph cut 30 has been performed, a group of pixels occupying a homogenous area with consistent texture and/or colour is identified. In the following, such a group of consistent pixels will be referred as texture region. The segmentation based on texture is used to clean up the depth regions. For example, due to an erroneous assignment of different depth values, an object might be separated into a plurality of areas. To identify areas relating to the same object, starting from segmentation according to the quantised depth map, depth regions are identified which relate to a same object.

Before this combination of texture regions to a common object is carried out, an evaluation of the reliability of texture regions computed by a graph cut algorithm is performed. Depth regions where the graph cut procedure leads to an identification of unreliable texture regions are pruned out.

There are several ways to evaluate the reliability of the texture region, for example, texture regions containing only less local features, for instance only three values, are considered as unreliable. Another predetermined threshold value for identifying unreliable texture regions is also possible.

Another possible way to evaluate the reliability of the texture region is applied for a texture region which is distributed in a plurality of different depth regions and which may be erroneously detected as a single texture region. Each part of the texture region may relate to a separate object. However, such a texture region also might correctly identify a big area occupying a significant portion of the image. In order to discriminate among these two possibilities, the depth region is reduced to a part of the texture region comprising most of the local features. For example, a depth region is chosen comprising 95% of the local features. However, another threshold for limiting the texture region might be also possible. The small percentage of remaining local features that are scattered around are eliminated. The remaining texture region is considered reliable.

Regarding the remaining texture regions, another possible way to evaluate the reliability of the remaining texture region is based on a confidence value. A confidence value for considering the reliability of the remaining texture region is calculated according to the following formula:

$$Confidence = \frac{nDR - 1}{nFeat}$$

In this formula, nDR is the number of depth regions covered by the texture region and nFeat is the number of local features in the texture region. If the confidence value is below a predetermined threshold value, the texture region is considered unreliable and eliminated. Otherwise, the texture region is considered reliable.

The performing of the steps 41 and 42 does not have any time sequence requirement. They may be performed in parallel, or one after the other.

Further, in step 43 of the method shown in Fig. 3 a histogram of the local features distribution among different depth regions is computed: to compute the local features distribution, the depth region pertaining to each local features of a texture region is obtained, and a histogram of the number of local features occurring in each depth region computed, in order to evaluate whether the local features of a texture region are spread on different depth regions. The resulting histogram values will be referred as *histogramValue* hereinafter. After eliminating all unreliable texture regions, histograms of local feature distributions among the different depth regions are computed.

In step 44, a segmentation based on texture regions is performed. For this purpose, a minimum threshold value *minTreshold* and a maximum threshold value *maxTreshold* are established. Two or more depth regions are considered to relate to the same depth region if the histograms contain one or more texture region with histogram values *histogramValue* for all depth regions in the range of

$$minTreshold < histogramValue < maxTreshold.$$

For example the minimum threshold value may be set to 0.1, and the maximum threshold value may be set to 0.9. However, other values for minimum and maximum thresholds might be also possible.

Further, the depth distance between the depth maps are normalized using the following equation:

$$\frac{\text{abs}(depth1 - depth2)}{maxDepthRange}$$

wherein *depth1* is a depth value of a first depth region, *depth2* is a depth value of a second region and *maxDepthRange* is the maximum range of depth values in the image.

The normalized depth distance between the depth regions has to be under a predetermined threshold value *depthThres*:

$$\frac{\text{abs}(depth1 - depth2)}{maxDepthRange} < depthThres.$$

For example, the predetermined threshold value *depthThres* for the normalized depth distance may be set to 0.1.

In this way, segmentation of 3D image data can be performed to obtain a plurality of individual depth regions. Since this segmentation is performed based on a graph cut method employing vertexes relating to the local features, only a sparse graph is used. This sparse graph comprises a significant reduced number of vertexes with respect to a graph having a vertex for each pixel of an image. Thus, the image segmentation according to the present invention can be carried out much faster and with lower computational resources. Accordingly, the segmentation even can be carried out on small mobile devices providing only limited computational resources.

According to a further embodiment, the image data comprises a plurality of channels, for instance, a plurality of chrominance channels or individual colour channels, like red, green and blue. In this case, the segmentation can be carried out for each channel separately. After the individual image segmentation processes have been completed, the segmentation results can be combined in order to obtain a final common segmentation result.

Optionally, in order to further accelerate the image segmentation, the image data can be segmented into foreground image data relating to a foreground and background image data relating to the background. Usually no image segmentation for the background image data relating to the background is required for re-targeting. Thus, image segmentation further can speed up by skipping background data and only considering the foreground image data.

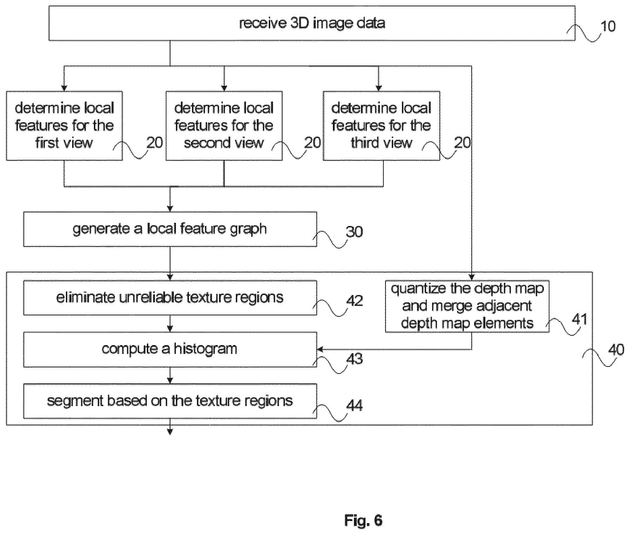

Fig. 6 illustrates a flow diagram of a method for segmentation of 3D image data according to an embodiment of the invention, which comprises all steps according to the preceding method embodiment of the present invention.

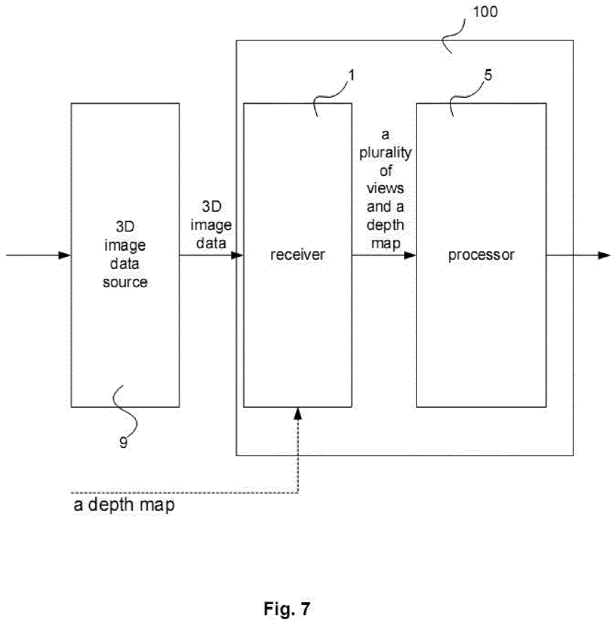

According to another embodiment, as shown in Figure 7 an apparatus 100 for segmentation of 3D image data of a 3D image is provided. The apparatus 100 may comprise a processor 5 configured to perform the steps according to the preceding method embodiment of the present invention. The apparatus 100 may further comprise a receiver configured to receive the 3D image data, to determine the plurality views of the image, and to obtain the depth map 110 of the image. The receiver 1 may receive the 3D image data from a 3D image data source 9, such as a camera or a camera system, a transmission interface, e.g. a wireline or wireless transmission interface, or a 3D image data memory or any other source providing 3D image data. The receiver may be configured to obtain the depth map 110 of the 3D image by computing based on the received 3D image data, or by receiving the depth map 110 from an external device. When the depth map is obtained by receiving from an external device the receiver 1 may be further configured for receiving the depth map 110 of the 3D image. Alternatively, the apparatus 100 may further comprise an independent receiver configured for receiving the depth map 110 of the 3D image.

According to another embodiment, an alternative apparatus 100 for segmentation of 3D image data of a 3D image is provided. This apparatus 100 may comprise means for performing each step of the preceding method embodiment of the present invention.

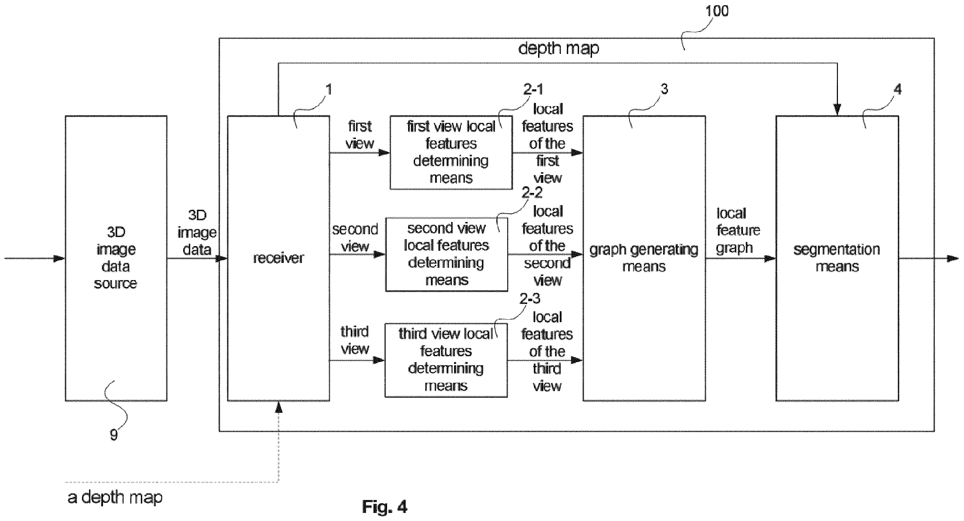

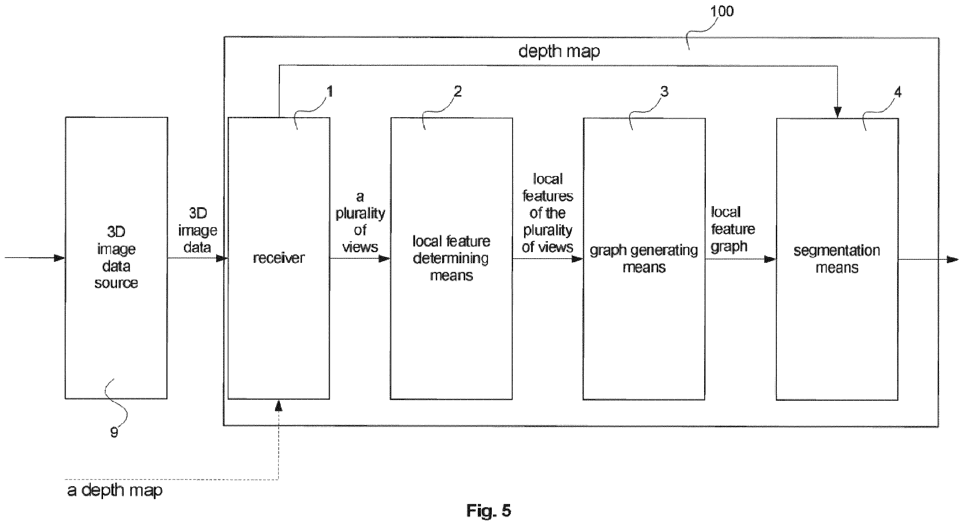

For instance, Figure 4 illustrates an apparatus for segmentation of a 3D image data of a 3D image according to the preceding method embodiment of the present invention. The apparatus 100 comprises a local feature determining means 2. The local feature determining means 2 determines the local features of a plurality of views 101, 102, 103 of the 3D image as already described above. Alternatively, as shown in Figure 5 the determining means 2 may be formed by a plurality of independent means for determining, for instance, a first view local feature determining means 2-1, a second view local feature determining means 2-2 and a third view local feature determining means 2-3. The number of the view local feature determining means may correspond to the number of the views of the image. Here the plurality of N=3 of views is taken as an example. Each view 101, 102 and 103 of the 3D image is provided to the corresponding view local feature determining means 2-1, 2-2 and 2-3, respectively.

Based on the local features determined by local feature determining means 2, or the respective view local feature determining means 2-i, 0<i<N, N representing the number of views of the 3D image, graph generating means 3 determines a local feature graph. Additionally, graph generating means 3 may perform a graph cut based on the generated local feature graph.

Finally, segmentation means 4 computes an image segmentation of the 3D image data. As a result, the plurality of depth regions are computed based on the determined local feature graph and the depth map.

Optionally, the segmentation means 4 may further comprise sub-means for performing the corresponding steps 41-45 of the method embodiment of the present invention.

The apparatus 100 as shown in Figures 4 and 5 may further comprise a receiving receiver 1 for receiving 3D image data of a 3D image, determining the plurality views 101, 102 and 103 of the 3D image, and obtaining a depth map 110 of the 3D image. In order to receive the image data, the receiver 1 may be connected directly to a 3D image data source 9, such as a camera or a camera system. Alternatively, the receiver 1 may also receive the image data from a 3D image data source 9, such as a transmission interface, e.g. a wireline or wireless transmission interface, a 3D image data memory or any other source providing 3D image data.

The receiver 1 is configured for obtaining the depth map 110 of the 3D image by computing based on the received 3D image data or by receiving a depth map 110 from an external device.

The receiver 1 may comprise sub-means for obtaining the depth map 110 and the plurality views 101, 102 and 103, respectively. The means for obtaining the depth map 110 may comprise means for computing the depth map 110 based on the received 3D image data, and/or means for receiving the depth map 110 from an external device. The external device may obtain the 3D image data from the 3D image data source 9 and compute the depth map 110 based on the 3D image data.

When the depth map 110 is obtained from an external device, the depth map 110 being received by the receiver 1 is shown in Figures 4 and 5 as an example. Alternatively, the segmentation apparatus 100 may further comprise independent means for receiving the depth map 110 and providing the received depth map 110 to the segmentation means 4. Thereby the means of the receiver 1 configured for receiving the depth map 110 are not needed accordingly.

Optionally, the apparatus 100 may further comprise other means for performing the preceding method embodiment of the present invention.

The 3D image data source 9 as shown in Figures 4-5 and 7 may be an external source with respect to the apparatus 100 as shown in Figures 4-5 and 7, alternatively, the 3D image data source 9 may be a part of the apparatus 100 as shown in Figures 4-5 and 7 as well.

Summarizing, the present invention provides a method and an apparatus for real time object segmentation in 3D image data based on sparse graphs. In order to reduce the computational effort for object segmentation of 3D image data, the segmentation process is performed based on a sparse graph comprising only a reduced number of vertexes, each vertex relating to a local feature element of the image. In this way, the number of vertexes in the graph can be significantly reduced and the image segmentation can be carried out very fast.

**Claims**

**1.** A computer-implemented method for segmentation of 3D image data of a 3D image, the method comprising:

• determining (20) local features for each of a plurality of views (101, 102, 103) of the 3D image;

• determining (30) a local feature graph based on the determined local features, wherein the local feature graph comprises a plurality of vertexes relating to the local features, wherein each local feature is a compact description of a patch surrounding a point of the 3D image and each vertex is linked to a predetermined number of spatially adjacent vertexes, and the determining (30) the local feature graph comprises assigning (30) an edge weight to each edge between two vertexes;

• quantising (41) a depth map (100) of the 3D image data, the depth map obtained from an external device or by computing based on the 3D image data;

• identifying (41) depth regions by determining contiguous depth map elements having a same quantised depth value;

• identifying (42) texture regions comprising consistent pixels in the 3D image based on the 3D image data;

• for each of the texture regions among the identified texture regions:

    o calculating (42) a confidence value for the texture region by using the following formula:

$$confidence\ value = \frac{nDR - 1}{nFeat}$$

    wherein nDR is a number of depth regions covered by the texture region and nFeat is a number of local features of the local feature graph in the texture region;

    ∘ comparing (42) the calculated confidence value with a threshold value; and determining (42) the texture region as an unreliable texture region if the calculated confidence value is below the threshold value and determining (42) the texture region as a reliable texture region if the calculated confidence value is equal to or higher than the threshold value;

• eliminating (42) the unreliable texture regions;

• computing, for each reliable texture region, a histogram of a local feature distribution among the depth regions covered by the texture region;

• segmenting the 3D image into a plurality of depth regions based on the histograms of the reliable texture regions.

2. The method according to claim 1, the method further comprising:
separating the 3D image data into foreground image data and background image data, wherein the segmentation is performed only for the foreground image data.

3. A 3D image segmentation apparatus (100) for segmentation of 3D image data of a 3D image, wherein the 3D image segmentation apparatus (100) is configured and intended to perform any of the methods according to claims 1 - 2.

**Patentansprüche**

1. Computerimplementiertes Verfahren zur Segmentierung von 3D-Bilddaten eines 3D-Bildes, wobei das Verfahren umfasst:

• Bestimmen (20) lokaler Merkmale für jede von mehreren Ansichten (101, 102, 103) des 3D-Bildes;

• Bestimmen (30) eines lokalen Merkmalsgraphen basierend auf den bestimmten lokalen Merkmalen, wobei der lokale Merkmalsgraph mehrere Scheitelpunkte umfasst, die sich auf die lokalen Merkmale beziehen, wobei jedes lokale Merkmal eine kompakte Beschreibung eines Flecks ist, der einen Punkt des 3D-Bildes umgibt, und jeder Scheitelpunkt mit einer vorbestimmten Anzahl von räumlich benachbarten Scheitelpunkten verknüpft ist, und das Bestimmen (30) des lokalen Merkmalsgraphen das Zuweisen (30) eines Kantengewichts zu jeder Kante zwischen zwei Scheitelpunkten umfasst;

• Quantisieren (41) einer Tiefenkarte (100) der 3D-Bilddaten, wobei die Tiefenkarte von einer externen Vorrichtung oder durch Berechnen basierend auf den 3D-Bilddaten erhalten wird;

• Identifizieren (41) von Tiefenbereichen durch Bestimmen zusammenhängender Tiefenkartenelemente mit einem gleichen quantisierten Tiefenwert;

• Identifizieren (42) von Texturbereichen, die konsistente Pixel in dem 3D-Bild umfassen, basierend auf den 3D-Bilddaten;

• für jeden der Texturbereiche unter den identifizierten Texturbereichen:

o Berechnen (42) eines Vertrauenswertes für den Texturbereich unter Verwendung der folgenden Formel:

$$Vertrauenswert = \frac{nDR - 1}{nFeat}$$

wobei nDR eine Anzahl von Tiefenbereichen ist, die durch den Texturbereich abgedeckt werden, und nFeat eine Anzahl von lokalen Merkmalen des lokalen Merkmalsgraphen in dem Texturbereich ist;

◦ Vergleichen (42) des berechneten Vertrauenswertes mit einem Schwellenwert; und Bestimmen (42) des Texturbereichs als unzuverlässigen Texturbereich, wenn der berechnete Vertrauenswert unter dem Schwellenwert liegt, und Bestimmen (42) des Texturbereichs als zuverlässigen Texturbereich, wenn der berechnete Vertrauenswert gleich oder höher als der Schwellenwert ist;

• Eliminieren (42) der unzuverlässigen Texturbereiche;
• Berechnen eines Histogramms einer lokalen Merkmalsverteilung unter den vom Texturbereich abgedeckten Tiefenbereichen für jeden zuverlässigen Texturbereich;
• Segmentieren des 3D-Bildes in mehrere Tiefenbereiche basierend auf den Histogrammen der zuverlässigen Texturbereiche.

**2.** Verfahren nach Anspruch 1, wobei das Verfahren ferner umfasst:
Trennen der 3D-Bilddaten in Vordergrundbilddaten und Hintergrundbilddaten, wobei die Segmentierung nur für die Vordergrundbilddaten durchgeführt wird.

**3.** 3D-Bildsegmentierungsvorrichtung (100) zur Segmentierung von 3D-Bilddaten eines 3D-Bildes, wobei die 3D-Bildsegmentierungsvorrichtung (100) dazu konfiguriert und bestimmt ist, eines der Verfahren nach den Ansprüchen 1 - 2 durchzuführen.

## Revendications

**1.** Procédé mis en œuvre par ordinateur pour la segmentation de données d'image 3D d'une image 3D, le procédé comprenant de :

- déterminer (20) des caractéristiques locales pour chacune d'une pluralité de vues (101, 102, 103) de l'image 3D,
- déterminer (30) un graphe de caractéristiques locales sur la base des caractéristiques locales déterminées, dans lequel le graphe de caractéristiques locales comprend une pluralité de sommets relatifs aux caractéristiques locales, dans lequel chaque caractéristique locale est une description compacte d'un carreau entourant un point de l'image 3D et chaque sommet est lié à un nombre prédéterminé de sommets spatialement adjacents, et la détermination (30) du graphe de caractéristiques locales comprend d'attribuer (30) un poids d'arête à chaque arête entre deux sommets ;
- quantifier (41) une carte de profondeur (100) des données d'image 3D, la carte de profondeur étant obtenue à partir d'un dispositif externe ou par calcul sur la base des données d'image 3D ;
- identifier (41) des régions de profondeur en déterminant des éléments de carte de profondeur contigus ayant une même valeur de profondeur quantifiée ;
- identifier (42) des régions de texture comprenant des pixels cohérents dans l'image 3D sur la base des données d'image 3D ;
- pour chacune des régions de texture parmi les régions de texture identifiées :

◦ calculer (42) une valeur de confiance pour la région de texture en utilisant la formule suivante :

$$valeur\ de\ confiance = \frac{nDR - 1}{nFeat}$$

où nDR est un nombre de régions de profondeur couvertes par la région de texture et nFeat est un nombre de caractéristiques locales du graphe de caractéristiques locales dans la région de texture ;
◦ comparer (42) la valeur de confiance calculée avec une valeur de seuil ; et déterminer (42) la région de texture en tant que région de texture non fiable si la valeur de confiance calculée est inférieure à la valeur de seuil, et déterminer (42) la région de texture en tant que région de texture fiable si la valeur de confiance calculée est supérieure ou égale à la valeur de seuil ;

- éliminer (42) les régions de texture non fiables ;
- calculer, pour chaque région de texture fiable, un histogramme d'une distribution de caractéristiques locales parmi les régions de profondeur couvertes par la région de texture ;
- segmenter l'image 3D en une pluralité de régions de profondeur sur la base des histogrammes des régions de texture fiables.

2. Procédé selon la revendication 1, le procédé comprenant en outre de :
séparer les données d'image 3D en données d'image de premier plan et en données d'image d'arrière-plan, dans lequel la segmentation est effectuée uniquement pour les données d'image de premier plan.

3. Appareil de segmentation d'images 3D (100) pour la segmentation de données d'images 3D d'une image 3D, dans lequel l'appareil de segmentation d'images 3D (100) est configuré et destiné à exécuter l'un quelconque des procédés selon les revendications 1 et 2.

**Fig. 1**

**Fig. 2**

local feature graph                    depth map

42                                                              41

43

44

Fig. 3

Fig. 4

Fig. 5

Fig. 6

Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080137989 A

- US 20080137989 A1

**Non-patent literature cited in the description**

- RGB-(D) scene labeling: Features and algorithms. **XIAOFENG REN et al.** COMPUTER VISION AND PATTERN RECOGNITION (CVPR), 2012 IEEE CONFERENCE ON. IEEE, 16 June 2012, 2759-2766